# FASCICULE DE BREVET EUROPEEN

(11) **EP 1 696 523 B1**
(45) Date de publication et mention de la délivrance du brevet: **02.09.2009**
(21) Numéro de dépôt: 06100771.2
(22) Date de dépôt: 24.01.2006
(51) Int. Cl.: H01S 3/30, H01S 3/067

(54) **Amplificateur optique à diffusion raman**
Optischer Ramanstreuungsverstärker
Raman scattering optical amplifier

(30) Priorité: 24.02.2005 FR 0550509
(43) Date de publication de la demande: 30.08.2006
(73) Titulaire: Alcatel Lucent, 75008 Paris (FR)
(72) Inventeur: BUROV, Ekaterina, 92100, BOULOGNE BILLANCOURT (FR); MOREAU, Christine, 91120, PALAISEAU (FR); LEPLINGARD, Florence, 78350, JOUY- EN -JOSAS (FR); LORCY, Laurence, 77310, ST FARGEAU PONTHIERRY (FR); BIGOT, M. Laurent, 59260, HELLEMMES (FR)
(74) Mandataire: Sciaux, Edmond

(56) Documents cités:
- EP-A- 1 455 425
- JACKSON S D: "Raman oscillation with intracavity pumping of a fibre laser" OPTICS COMMUNICATIONS, NORTH-HOLLAND PUBLISHING CO. AMSTERDAM, NL, vol. 190, no. 1-6, 1 avril 2001 (2001-04-01), pages 285-289, XP004233782 ISSN: 0030-4018

## Description

La présente invention concerne les amplificateurs optiques à effet Raman utilisés notamment dans les systèmes optiques de télécommunications.

Les amplificateurs Raman ont des propriétés intéressantes pour les systèmes de transmission optique à multiplexage en longueur d'onde, dits WDM en terminologie anglo-saxonne, du fait d'une bande passante importante, un bruit faible et une faible sensibilité aux variations de puissance d'entrée des signaux.

Cependant, pour obtenir une amplification efficace, il est nécessaire d'utiliser une pompe optique de forte puissance et une fibre optique de longueur importante, ce qui rend les amplificateurs Raman coûteux.

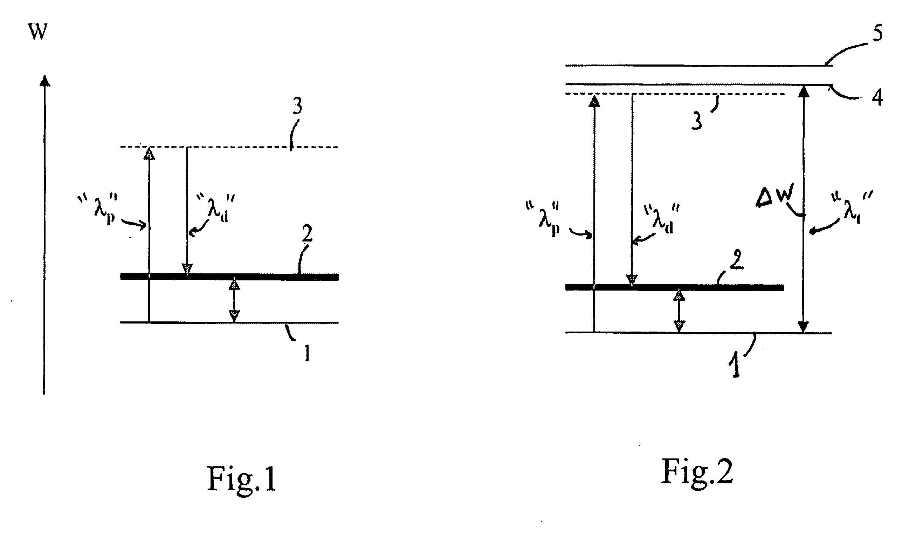

L'amplification Raman utilise classiquement la diffusion Raman stimulée non-résonante. Dans ce type d'amplification, comme représenté par le diagramme d'énergie W sur la figure 1, un photon de l'onde de la pompe à la longueur d'onde λp perd son énergie pour créer un autre photon d'énergie moindre, donc de plus grande longueur d'onde λ_{d} et de fréquence plus faible (diffusion inélastique). Le reste de l'énergie du photon incident est absorbé par le milieu de propagation (fibre optique) sous forme de vibrations moléculaires (phonon) représentée par la flèche verticale entre une première ligne horizontale pleine 1 symbolisant un niveau énergétique de référence correspondant à un état "vibrationnel" (ou vibratoire) fondamental et une seconde ligne horizontale pleine épaisse 2 symbolisant une bande de niveaux énergétiques correspondant à des états "vibrationnels" excités. Pour accroître l'efficacité de l'amplification, il est connu de réduire la surface effective de la fibre optique pour augmenter le confinement et/ou doper fortement le coeur de la fibre avec un matériau à coefficient Raman élevé, tel que le germanium sous la forme d'un oxyde faisant partie de la matrice constituant le coeur. Le dopage du coeur, s'il augmente l'efficacité de l'amplification, a cependant pour corollaire une augmentation des pertes.

Pour expliquer ce type d'amplification Raman classique, la représentation précédente fait intervenir un niveau d'énergie électronique virtuel, représenté sur la figure par une ligne horizontale en pointillés 3, pour montrer le transfert de l'énergie de l'onde de pompe à λₚ au signal à amplifier à λ_{d}. Ce niveau est "virtuel" car il ne correspond à aucun état énergétique stable d'atomes constitutifs du coeur, y compris les éventuels dopants. Cette description de processus Roman avec le recours à un niveau « virtuel » est justifiée par le fait que l'interaction des photons avec les molécules et les ré-émissions de photons se produisent quasi-instantanément.

La demande de brevet EP 1455425 et l'article "Raman oscillation with intracavity pumping of a fible laser "(Stuart D. Jackson, Optics Communications, 01.04.2001) decrivent des fibres optiques à Amplification Raman.

L'invention a pour but de permettre une amplification Raman plus efficace que l'amplification par diffusion Raman stimulée classique.

Ce but est atteint par un amplificateur utilisant l'effet de diffusion Raman stimulée, comprenant un guide optique associé à une pompe optique pour produire une onde de pompe, Le guide optique comporte une structure de coeur qui inclut au moins un composant optiquement actif présentant une transition d'énergie électronique correspondant à une longueur d'onde dite de transition. Selon l'invention la différence entre la longueur d'onde de pompe (λp) et la longueur d'onde de transition (λp) est suffisamment importante pour éviter que le signal de pompe ne soit absorbé par la transition électronique sans toutefois empêcher le transfert d'énergie du photon de pompe à un niveau d'énergie électronique réel, et la longueur d'onde de l'onde de pompe (λp) est supérieure à la longueur d'onde de transition (λt).

On entend ici par "structure de coeur" les régions du guide où reste concentrée la majorité de la puissance optique des ondes se propageant dans le guide. Dans le cas par exemple où le guide est une simple fibre optique, la structure de coeur se réduit à la zone centrale de la fibre qui correspond à la région ayant un fort indice par rapport à celui (ou ceux) de sa zone périphérique (classiquement appelée gaine).

Mais l'invention peut s'appliquer aussi à des guides ayant des structures de coeur plus complexes, tels que les fibres munies de coeurs et gaines concentriques multiples.

Selon le contexte de mise en oeuvre, divers composants peuvent être envisagés, l'essentiel étant que le composant choisi soit optiquement actif, c'est-à-dire présente une longueur d'onde de transition adaptée à la longueur d'onde à amplifier, compte tenu du matériau utilisé pour constituer la matrice du coeur du guide et des possibilités de choix de la longueur d'onde de l'onde de pompe.

Ainsi, si on impose une certaine longueur d'onde de pompe λp, on choisira un composant avec lequel existe une transition d'énergie électronique ΔW de valeur telle que la longueur d'onde λt qui correspond à cette valeur (c'est-à-dire telle que ΔW = h.c/λt selon la formule habituelle liant les transitions d'énergie électronique ΔW aux longueurs d'onde λ), soit voisine de λp sans lui être tout à fait égale. Cette différence devait être suffisante pour ne pas produire de fluorescence résonante du dopant qui pourrait être beaucoup plus puissante que l'effet Raman et le masquer.

Le décalage précis à appliquer entre ces deux longueurs d'onde pourra être déterminé dans chaque contexte particulier de façon expérimentale. Une façon simple pour le faire consiste à effectuer des mesures du coefficient de gain Raman de l'amplificateur en faisant varier la longueur d'onde de l'onde de pompe. On pourra dire que l'amplificateur est placé en condition de fonctionner conformément à l'invention dès lors que les longueurs d'onde de l'onde de pompe et de transition diffèrent d'une valeur ajustée pour que l'amplificateur présente un coefficient de gain Raman au moins égal au double de la valeur que ce coefficient de gain prendrait en l'absence de composant optiquement actif.

Selon un autre aspect de l'invention, on prendra de préférence une longueur d'onde de l'onde de pompe supérieure à la longueur d'onde de transition. Cette disposition est en effet généralement préférable car dans le cas contraire les pertes du signal peuvent être augmentées par une absorption d'énergie à la longueur d'onde du signal par l'élément actif.

De manière avantageuse, le composant optiquement actif est choisi parmi les éléments suivants : les ions de terres rares, les métaux de transition, les matériaux semi-conducteurs.

Ce composant est dispersé dans la structure de coeur du guide optique, cette dispersion pouvant être localisée dans toute la structure ou dans une partie seulement. Selon le type de composant, il sera dispersé soit sous forme élémentaire soit sous forme de nanoparticules.

Le guide optique de l'amplificateur peut notamment être constitué d'une fibre optique ou d'un guide d'onde planaire.

L'invention concerne également un laser réalisé au moyen d'un amplificateur optique conforme à la description exposée ci-dessus.

L'invention sera mieux comprise à la lecture de la description qui suit et à l'examen des figures qui l'accompagnent. Celles-ci, qui ne sont données qu'à titre indicatif et nullement limitatif de l'invention, montrent :
- figure 1 : un diagramme d'énergie illustrant le principe de l'amplification par diffusion Raman stimulée selon l'art antérieur et déjà commentée précédemment,
- figure 2 : un diagramme d'énergie illustrant le principe de l'amplification par diffusion Raman selon l'invention,
- figure 3 : trois diagrammes d'énergie a), b), c) pour montrer comment choisir le pompage pour obtenir la diffusion Raman selon l'invention,
- figure 4 : un amplificateur Raman, et
- figure 5 : un diagramme montrant l'effet de l'utilisation d'un matériau optiquement actif selon l'invention sur le gain d'un amplificateur Raman.

Comme on peut le voir sur diagramme d'énergie de la figure 2, l'invention se distingue de l'art antérieur en ce que l'amplification utilise une transition d'énergie électronique qui implique un niveau d'énergie électronique intermédiaire réel 4. Un autre niveau d'énergie 5 plus élevé est aussi représenté. Ceci a pour effet d'augmenter de manière considérable l'efficacité de la diffusion Raman.

Plus précisément, on choisit un matériau optiquement actif qui présente une transition entre des niveaux d'énergie qui correspond à une longueur d'onde de transition λt proche de la longueur d'onde de pompe λp. Par « proche », on entend que la différence entre la longueur d'onde de pompe et la longueur d'onde de transition électronique doit être suffisamment importante pour éviter que le signal de pompe ne soit absorbé par la transition électronique, mais cependant pas excessive au point de ne pas permettre le transfert d'énergie du photon de pompe à ce niveau électronique réel.

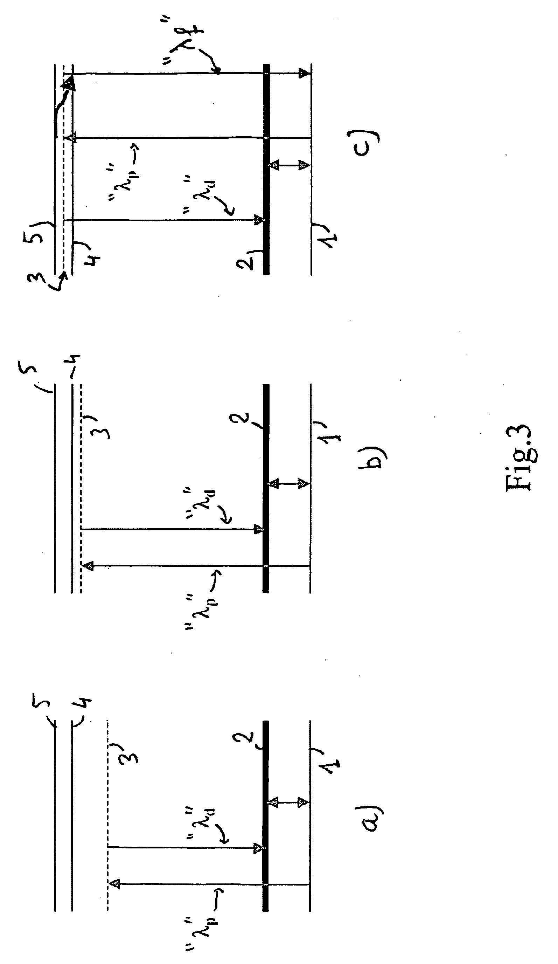

Les trois diagrammes d'énergie de la figure 3 permettent de montrer que le choix du pompage en fonction du matériau optiquement actif choisi est important pour obtenir le résultat recherché.

Le diagramme a) correspond au cas où la longueur d'onde de pompe λp est trop élevée par rapport à la longueur d'onde de transition λt pour permettre des interactions avec le matériau optiquement actif. On se retrouve alors dans la situation d'une amplification Raman classique, comme dans le cas de la figure 1.

Le diagramme b) correspond au cas où la longueur d'onde de pompe λp est optimale, c'est-à-dire suffisamment proche de la longueur d'onde de transition λt.

Le diagramme c) correspond à un autre cas où la longueur d'onde de pompe λp est trop proche de la longueur d'onde de transition λt. Ce cas provoque une fluorescence symbolisée par λf.

En particulier, pour les applications dans le domaine des télécommunications, on peut avantageusement utiliser une transition d'énergie qui correspond à une longueur d'onde de la pompe comprise entre 400 à 2066 nm. Typiquement, si la longueur d'onde de l'onde de pompe et la longueur d'onde de transition correspondent à des nombres d'onde qui, exprimés en cm⁻¹, diffèrent de quelques centaines, on observera un coefficient de gain Raman ayant entre 2 et 10 fois la valeur que prend ce coefficient de gain avec un amplificateur de même structure et placé dans les mêmes condition de pompage, mais démuni de composant optiquement actif selon l'invention.

Avantageusement, on choisira une longueur d'onde de la pompe supérieure à la longueur d'onde de transition pour ne pas produire la fluorescence résonante du matériau optiquement actif qui pourrait être beaucoup plus puissante que l'effet Raman et le masquer. Comme le montre la figure c), la fluorescence à λf peut être favorisée par une transition depuis le niveau d'énergie supérieur 5.

Il convient de noter que l'amélioration de l'amplification par rapport à l'art antérieur est due à la proximité entre la longueur d'onde de la pompe et la longueur d'onde de transition, et que le gain ne dépend pas, au contraire de la diffusion Raman stimulée classique, de la composition de la matrice constitutive du milieu de propagation, mais du type et de la quantité de composant actif utilisé.

Parmi les matériaux optiquement actifs utilisables, on peut citer notamment les ions de terres rares, des matériaux semi-conducteurs ou des ions métalliques.

Comme dans le cas de l'amplification Raman classique, la longueur d'onde de pompe est choisie en fonction de la bande d'amplification souhaitée et des bandes vibratoires pour le milieu de propagation.

Des exemples de matériaux optiquement actifs et des bandes d'émission correspondantes utilisables pour le signal de pompe sont donnés à titre d'exemple ci-dessous :

| **Matériaux optiquement actifs** | **Bande d'émission du signal de pompe (nm)** |
|---|---|
| Nanoparticules de Ge | 500-1900 |
| Nanoparticules de Si | 300-800 |
| Yb³⁺ | 1000-1200 |
| Nanoparticules de PbS | 1200-2000 |
| Tm³⁺ | 1400-1500 |
| Er³⁺ | 1650-1750 |

L'avantage des nanoparticules, en particulier de semi-conducteur, est de pouvoir adapter la longueur d'onde de transition électronique en contrôlant la taille des nanoparticules.

Concernant les aspects de réalisation d'un amplificateur conforme à l'invention, on peut utiliser les procédés classiques couramment appliqués pour la fabrication des fibres ou des guides planaires dopés.

L'invention peut bien entendu s'appliquer à toute structure de guide. Le composant optiquement actif peut aussi constituer une couche de la structure de coeur du guide optique. Cette couche sera alors annulaire dans le cas où le guide est une fibre optique ou bien planaire dans le cas d'un guide d'onde planaire.

Concernant le cas des réalisations utilisant des nanoparticules, on pourra se reporter par exemple à la demande de brevet européen EP-A-1347545, publiée le 24 septembre 2003, et qui correspond à la demande de brevet américain US-A-2003/0175003, publiée le 18 septembre 2003.

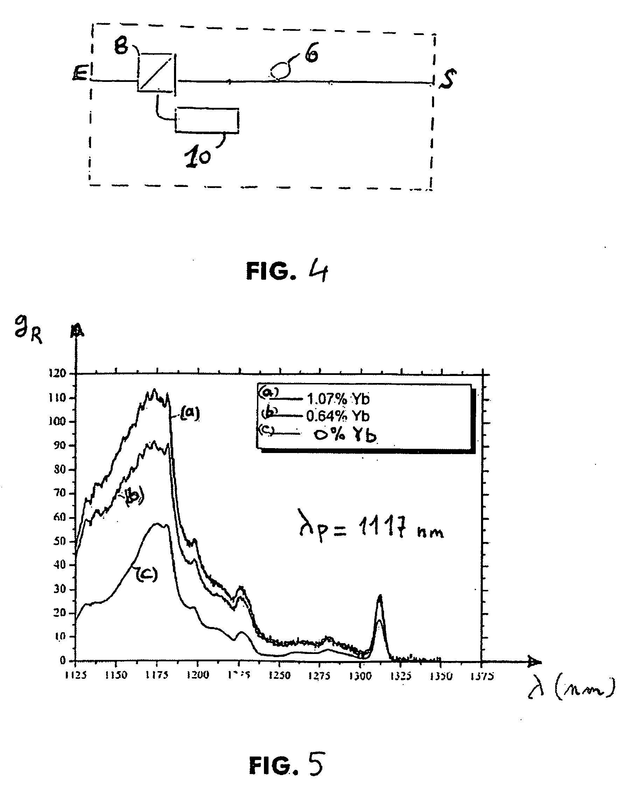

La structure générale d'un amplificateur selon l'invention est représentée sur la figure 4. Cet amplificateur comprend selon un schéma général classique un guide optique, qui dans le mode de réalisation représenté comporte une fibre optique 6 adaptée à une amplification Raman, une pompe 10 et un coupleur 8 pour injecter dans la fibre optique 6 l'onde fournie par la pompe, ainsi qu'un signal à amplifier reçu sur une entrée E. Une sortie S de la fibre constitue la sortie de l'amplificateur.

L'efficacité de l'amplification par diffusion Raman selon l'invention est nettement améliorée par rapport à l'amplification classique par diffusion Raman stimulée. Ainsi, pour une amplification donnée, il est possible, par rapport à l'art antérieur, de réduire la puissance de la pompe et/ou la longueur du milieu de propagation.

La figure 5 montre trois courbes qui représentent pour une longueur d'onde de pompe de 1117 nm les variations en fonction de la longueur d'onde du coefficient de gain Raman g_{R} ("intrinsec Raman gain" en anglais) respectivement de trois amplificateurs utilisant chacun une fibre de même structure classique mais dont le coeur présente des caractéristiques de dopage en élément actif différentes :
Courbe (a) : dopage par Yb avec une concentration en poids de 1,07 %;
Courbe (b) : dopage par Yb avec une concentration en poids de 0,64 %;
Courbe (c) : sans dopage par Yb.

Comme on le voit sur la figure 5, un doublement du gain peut être obtenu en dopant le milieu de propagation par des ions Yb3+ avec une concentration en poids l'ordre de 1%.

Bien entendu, il est possible d'associer plusieurs types de composants optiquement actifs ayant des propriétés différentes, notamment dans le but d'élargir la bande de gain de l'amplificateur.

Pour constituer un oscillateur ou source laser au moyen d'un amplificateur conforme à l'invention, il suffira de disposer l'amplificateur à l'intérieur d'une cavité résonante, par exemple en prévoyant à chaque extrémité de l'amplificateur un réflecteur approprié pouvant être réalisé de façon classique, comme par exemple un réflecteur de Bragg. Il convient de noter que la ou les longueur(s) d'onde d'oscillation du laser seront fonction de la pompe et des composants (particules, ions etc.) utilisés.

## Revendications

1. Amplificateur utilisant l'effet de diffusion Raman simulée comprenant un guide optique (6) associé à une pompe optique (10) pour produire une onde de pompe, ledit guide optique comportant une structure de coeur qui inclut au moins un composant optiquement actif présentant une transition d'énergie électronique correspondant à une longueur d'onde dite de transition (λt), **caractérisé en ce que** la différence entre la longueur d'onde de pompe (λp) et la longueur d'onde de transition (λt) est suffisamment importante pour éviter que le signal de pompe ne soit absorbé par la transition électronique sans toutefois empêcher le transfert d'énergie du photon de pompe à un niveau d'énergie électronique réel, et la longueur d'onde de l'onde de pompe (λp) étant supérieure à la longueur d'onde de transition (λt).

2. Amplificateur selon la revendication 1, dans lequel le type et la quantité de composant actif utilisé sont choisis de manière à ajuster la valeur de la différence entre lesdites longueurs d'onde de l'onde de pompe (λp) et de transition (λt) pour que l'amplificateur présente un coefficient de gain Raman (g_{R}) au moins égal au double de la valeur que ce coefficient de gain prendrait en l'absence de composant optiquement actif.

3. Amplificateur selon l'une des revendications 1 ou 2, **caractérisé en ce que** la longueur d'onde (λp) de l'onde de pompe et la longueur d'onde de transition (λt) correspondent à des nombres d'onde qui, exprimés en cm⁻¹, diffèrent de quelques centaines.

4. Amplificateur selon l'une des revendications 1 à 3, **caractérisé en ce que** le composant optiquement actif est choisi parmi les éléments suivants : les ions de terres rares, les métaux de transition, les matériaux semi-conducteurs.

5. Amplificateur selon l'une des revendications 1 à 4, **caractérisé en ce que** le composant optiquement actif est dispersé dans ladite structure de coeur du guide optique, cette dispersion pouvant être localisée dans toute la structure ou dans une partie seulement.

6. Amplificateur selon la revendication 5, **caractérisé en ce que** le composant optiquement actif est dispersé sous forme élémentaire.

7. Amplificateur selon la revendication 5, **caractérisé en ce que** le composant optiquement actif est dispersé sous forme de nanoparticules.

8. Amplificateur selon les revendications 1 à 7, **caractérisé en ce que** le composant optiquement actif constitue une couche de ladite structure de coeur du guide optique.

9. Amplificateur selon l'une des revendications 1 à 8, **caractérisé en ce que** le guide optique (6) est choisi dans le groupe comprenant les fibres optiques et les guides d'onde planaires.

10. Source laser compostant un amplificateur optique disposé à l'intérieur d'une cavité résonante, **caractérisé en ce que** l'amplificateur est conforme à l'une des revendications 1 à 9.

## Claims

1. An amplifier using stimulated Raman scattering, comprising an optical guide (6) associated with an optical pump (10) to produce a pump wave, said optical guide comprising a core structure that includes at least one optically active component exhibiting an electronic energy transition corresponding to a so-called transition wave (λt) **characterized in that** the difference between the pump wave's wavelength (λp) and the transitional wavelength (λt) is high enough to keep the pump signal from being absorbed by the electronic transition, without preventing the transfer of the pump photon's energy to an actual electronic energy level, the pump wave's wavelength (λp) being greater than the transitional wavelength (λt).

2. An amplifier according to claim 1, wherein the type and quantity of active component used are chosen in such a way as to adjust the value of the difference between said pump wave's wavelength (λp) and transitional wavelength (λt) so that the amplifier exhibits a Raman gain coefficient (g_{R}) at least equal to twice the value that this gain coefficient would have in the absence of any optically active component

3. An amplifier according to claim 1 or 2, **characterized in that** the pump wave's wavelength (λp) and the transitional wavelength (λt) correspond to wave numbers which, when expressed in cm⁻¹, differ by a few hundred.

4. An amplifier according to one of claims 1 to 3, **characterized in that** the optically active component is chosen from among the following elements: rare earth ions, transition metals, and semiconducting materials.

5. An amplifier according to one of claims 1 to 4, **characterized in that** the optically active component is dispersed within said core structure of the optical guide, this dispersion potentially being localized within the entire structure or just within a part of it.

6. An amplifier according to claim 5, **characterized in that** the optically active component is dispersed in an elementary form.

7. An amplifier according to claim 5, **characterized in that** the optically active component is dispersed in the form of nanoparticles.

8. An amplifier according to one of claims 1 to 7, **characterized in that** the optically active component constitutes a layer of said core structure of the optical guide.

9. An amplifier according to one of claims 1 to 8, **characterized in that** the optical guide (6) is chosen from among the group comprising optical fibers and planar waveguides.

10. A laser source comprising an optical amplifier disposed within a resonant cavity, **characterized in that** the amplifier complies with one of claims 1 to 9.

## Patentansprüche

1. Verstärker, welcher die stimulierte Ramanstreuung verwendet und einen mit einer optischen Pumpe (10) assoziierten Lichtleiter (6) umfasst, um eins Pumpwelle zu erzeugen, wobei der besage Lichtleiter eine Kornstruktur aufweist, welche mindestens eine optisch aktive Komponente enthält, deren elektronischer Energieübergang einer sogenannten Übergangswellenlänge (λt) entspricht, **dadurch gekennzeichnet, dass** die Differenz zwischen der Pumpwellenlänge (λp) und der Übergangswellenlänge (λt) groß genug ist, um zu vermeiden, dass das Pumpsignal von dem elektronischen Übergang absorbiert wird, ohne jedoch die Energieübertragung des Pumpenphotons bei einem tatsächlichen elektronischen Energieniveau zu verhindern, und dass die Wellenlänge der Pumpwelle (λp) größer ist als die Übergangswellenlänge (λt).

2. Verstärker nach Anspruch 1, wobei der Typ und die Menge der verwendeten aktiven Komponente so gewählt werden, dass der Wert der Differenz zwischen den besagten Wellenlängen der Pumpwelle (λp) und der Übergangswelle (λt) angepasst wird, so dass der Verstärker einen Raman-Verstärkungskoeffizient (g_{R}) aufweist, welcher mindestens gleich dem Zweifachen des Wertes, welchen der Verstärkungskoeffizient ohne die optisch aktive Komponente aufweisen wurde, ist.

3. Verstärker nach einem der Ansprüche 1 oder 2, **dadurch gekennzeichnet dass** die Wellenlänge (λp) der Pumpwelle und die Übergangswellenlänge (λt) Wellenzahlen entsprechen, welche, ausgedrückt in cm⁻¹, um einige Hunderte verschieden sind.

4. Verstärker nach einem der Ansprüche 1 bis 3, **dadurch gekennzeichnet dass** die optisch aktive Komponente unter den folgenden Elemente gewählt wird: Ione der seltenen Erden, Übergangsmetalle, halbleitende Materialien.

5. Verstärker nach einem der Ansprüche 1 bis 4, **dadurch gekennzeichnet, dass** die optisch aktive Komponente in der besagten Kernstruktur des Lichtleiters verstreut ist, wobei diese Dispersion in der gesamten Struktur oder nur in einem Teil erfolgen kann.

6. Verstärker nach Anspruch 5, **dadurch gekennzeichnet, dass** die optisch aktive Komponente in elementarer Form verstreut ist.

7. Verstärker nach Anspruch 5, **dadurch gekennzeichnet, dass** die optisch aktive Komponente in der Form von Nanopartikeln verstreut ist.

8. Verstärker nach den Ansprüchen 1 bis 7, **dadurch gekennzeichnet, dass** die optisch aktive Komponente eine Schicht der besagten Kornstruktur des Lichtleiters bildet.

9. Verstärker nach einem der Ansprüche 1 bis 8, **dadurch gekennzeichnet, dass** der Lichtleiter (6) in der Gruppe, welche die optischen Fasern und die planaren Weilenleiter umfasst, gewählt wird.

10. Laserquelle mit einem optischen Verstärker, welcher im Inneren eines Resonanzhohlraums angeordnet ist, **dadurch gekennzeichnet, dass** der Verstärker einem der Ansprüche 1 bis 9 entspricht.
